**Europäisches Patentamt**

**European Patent Office**

**Office européen des brevets**

(11) Numéro de publication: **0 340 366 B1**

(12) **FASCICULE DE BREVET EUROPEEN**

(45) Date de publication de fascicule du brevet: **11.11.92**

(51) Int. Cl.⁵: **A61J 3/00**, B25J 21/02, A61G 10/00

(21) Numéro de dépôt: **88401072.9**

(22) Date de dépôt: **03.05.88**

(54) Isolateur, notamment pour travaux en milieu aseptique.

(43) Date de publication de la demande:
**08.11.89 Bulletin 89/45**

(45) Mention de la délivrance du brevet:
**11.11.92 Bulletin 92/46**

(84) Etats contractants désignés:
**BE DE ES GB IT NL SE**

(56) Documents cités:
**DE-C- 851 240**      **FR-A- 2 510 458**
**FR-A- 2 611 568**      **GB-A- 935 195**
**GB-A- 2 048 822**      **US-A- 2 785 824**
**US-A- 2 786 740**      **US-A- 3 084 684**

(73) Titulaire: **ISO CONCEPT**
**91-93, rue Marcel Dassault**
**F-92100 Boulogne(FR)**

(72) Inventeur: **Cazalis, Jean-Pierre**
**Thénac-Le-Bourg**
**F-24240 Sigoules(FR)**
Inventeur: **Saint Martin, Bernard**
**10, rue Guillot**
**F-92120 Montrouge(FR)**

(74) Mandataire: **Mongrédien, André et al**
**c/o SOCIETE DE PROTECTION DES INVEN-**
**TIONS 25, rue de Ponthieu**
**F-75008 Paris(FR)**

Rank Xerox (UK) Business Services

## Description

L'invention concerne un isolateur destiné à effectuer différents travaux en milieu aseptique, un tel isolateur étant notamment utilisable dans les industries médicale et pharmaceutique.

La fabrication et le conditionnement des produits tels que les médicaments ou que les substances destinées par exemple à nourrir un malade par voie parentérale sont généralement effectués en milieu aseptique. Pour cela, on utilise habituellement un isolateur de travail délimitant un volume clos et étanche auquel on accède par une ouverture normalement obturée de façon étanche par une porte. L'introduction des produits à l'intérieur de cet isolateur de travail s'effectue au moyen d'un isolateur navette, de relativement petite taille, conçu pour venir accoster de façon étanche l'ouverture prévue à cet effet dans l'isolateur de travail. Cet isolateur navette est lui-même alimenté à partir d'un isolateur de stockage intermédiaire dans lequel les produits sont stérilisés.

Dans la configuration actuelle, les produits et les matériels provenant de l'extérieur sont introduits par une ouverture obturable de dimension limitée dans un isolateur généralement spécialisé dans la stérilisation. Après que l'isolateur et son contenu ont été stérilisés, ce contenu est transféré dans un isolateur de travail maintenu en aseptie continue. Ce transfert s'effectue soit directement, soit au moyen d'un isolateur navette, mais toujours au travers d'ouvertures obturables de dimensions limitées. Lorsque leur utilisation est terminée, les produits et les matériels sont évacués à l'extérieur de l'isolateur de travail soit par le processus inverse, soit par d'autres moyens propres à conserver l'aseptie de l'isolateur de travail.

Dans cette conception, la cadence à laquelle s'effectuent les opérations mises en oeuvre à l'intérieur de l'isolateur de travail est limitée par la possibilité d'introduction des produits offerte par l'isolateur de stérilisation et/ou l'isolateur navette. Quel que soit le nombre des isolateurs utilisés, tous les transferts s'effectuent par des ouvertures obturables, le plus souvent circulaires, s'ouvrant sur l'extérieur ou communiquant entre elles, dont les dimensions sont limitées et voisines, par exemple de 500 mm de diamètre. Ces contraintes dimensionnelles imposent un temps de chargement et de déchargement du ou des isolateurs très pénalisant et exigent en permanence la présence de deux opérateurs.

Dans le cas fréquent où l'installation comprend au moins un isolateur de stérilisation et un isolateur de travail, il faut dans les mêmes conditions, transférer les produits d'un isolateur à l'autre, ce qui double ou triple les manutentions.

Une telle installation a aussi pour inconvénient d'être relativement complexe et délicate à mettre en oeuvre, puisque l'isolateur de stérilisation doit être restérilisé à tout instant.

Dans le document GB-A-935 195, il est proposé un dispositif comportant une armature liée à un support inférieur rigide et un certain nombre de panneaux aptes à être déployés sur l'armature à la manière d'une toile de tente. Les extrémités inférieures de chaque panneau sont fixées sur le contour rectangulaire du support par des attaches du type boutons-boutonnières. Si cette structure assure un accès plus aisé du volume clos, elle le fait au détriment de l'étanchéité. En particulier, même si on adjoignait à ce dispositif des joints d'étanchéité entre les panneaux adjacents et entre l'extrémité de chaque panneau et le support inférieur, une étanchéité satisfaisante ne pourrait pas être obtenue.

Par ailleurs, le document DE-A-851 240 décrit un isolateur pour champ opératoire, dans lequel un bord inférieur d'une paroi souple est monté sur un plateau rigide servant de support aux instruments utilisés pendant l'opération.

L'invention a précisément pour objet un isolateur parfaitement étanche permettant notamment d'effectuer des travaux en milieu aseptique et dont la conception permet d'introduire en une seule opération un volume important de produits, sans avoir recours à aucun isolateur extérieur.

A cet effet, il est proposé conformément à l'invention un isolateur étanche comportant une paroi comprenant une partie basse rigide par laquelle l'isolateur est apte à reposer sur le sol et dont un bord supérieur est délimité par une ceinture rigide, et une partie haute comportant une armature rigide supportant une paroi latérale souple dont un bord inférieur est apte à être raccordé de façon déconnectable sur la ceinture rigide, caractérisé par le fait qu'il comprend des moyens de stérilisation du volume clos délimité par la paroi souple et par le fait que la ceinture rigide a une forme convexe, la paroi latérale souple étant réalisée en une seule pièce, dépourvue d'ouverture et délimitée sur son bord inférieur par une ceinture déformable apte à encercler de façon étanche ladite ceinture rigide, et apte à être déconnectée de la ceinture rigide pour dégager un accès à l'intérieur de l'isolateur.

Avec un tel isolateur, il devient possible d'introduire en une seule opération une grande quantité de produits en retroussant la partie souple de la partie haute de la paroi, après l'avoir déconnectée de la partie basse. Il est à noter que cette opération peut se faire quel que soit le conditionnement des produits. Ensuite, les deux parties de l'isolateur sont à nouveau connectées de façon étanche et l'atmosphère contenue dans le volume clos est stérilisée avant que les travaux à effectuer ne soient entrepris.

Selon un premier mode de réalisation de l'invention, la ceinture déformable est non extensible, la ceinture rigide portant au moins un joint gonflable apte à venir en appui étanche contre la ceinture déformable sur toute la périphérie de cette dernière.

Selon un deuxième mode de réalisation de l'invention, la ceinture déformable est élastique, de façon à pouvoir encercler de façon étanche, par allongement, ladite ceinture rigide.

De préférence, la ceinture élastique porte alors des oeillets régulièrement répartis, aptes à être emboîtés sur des têtes de rivets solidaires de la ceinture rigide. Un positionnement satisfaisant de la ceinture élastique sur la ceinture rigide est ainsi assuré.

Dans chacun de ces deux modes de réalisation, la partie basse de la paroi est de préférence rigide.

Un mode de réalisation préféré de l'invention, ainsi qu'une variante de ce mode de réalisation, vont maintenant être décrits, à titre d'exemples nullement limitatifs, en se référant aux dessins annexés dans lesquels :

- la figure 1 est une vue en perspective partiellement éclatée représentant de façon schématique un mode de réalisation préféré d'un isolateur conforme à l'invention, et
- la figure 2 est une vue en perspective partiellement éclatée illustrant une variante de réalisation des moyens de raccordement étanches et déconnectables reliant les parties haute et basse de l'isolateur.

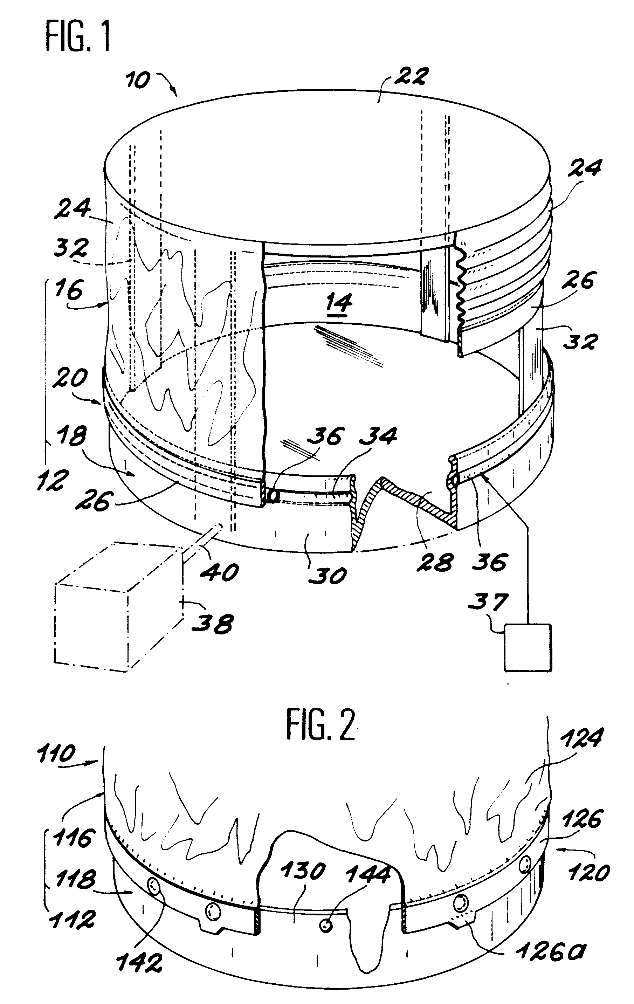

L'isolateur conforme à l'invention représenté sur la figure 1 est désigné de façon générale par la référence 10. Dans l'exemple de réalisation représenté, cet isolateur a la forme d'un cylindre d'axe vertical. Cette forme n'est toutefois nullement limitative, pourvu que la paroi latérale ait une forme convexe en section horizontale.

De façon habituelle, l'isolateur 10 comprend une paroi 12 délimitant un volume clos 14, étanche par rapport à l'extérieur.

Conformément à l'invention, la paroi 12 n'est pas réalisée en une seule partie mais comprend une partie haute 16 et une partie basse 18 conçues de façon à pouvoir être déconnectées totalement l'une de l'autre. A cet effet, des moyens de raccordement 20 étanches et déconnectables sont prévus entre ces deux parties 16 et 18.

Dans l'exemple de réalisation représenté sur la figure 1, qui concerne un isolateur de forme cylindrique, la partie supérieure 16 de la paroi 12 comporte un toit horizontal rigide 22 ayant approximativement la forme d'un disque. Le bord supérieur d'une paroi latérale souple et de préférence transparente 24 est fixé de façon étanche au bord périphérique du toit 22. Dans l'exemple représenté, cette paroi souple 24 a approximativement la forme d'un cylindre de révolution.

A l'extrémité inférieure de la paroi souple 24 est fixée de façon étanche une ceinture déformable 26, non extensible, formant une partie des moyens de raccordement 20.

La partie basse 18 de la paroi 12 de l'isolateur comprend quant à elle un fond rigide et horizontal 28 par lequel l'isolateur repose sur le sol. Ce fond 28, qui a généralement la forme d'un disque, est prolongé à sa périphérie par une paroi cylindrique 30 recourbée vers le haut et également rigide. Cette paroi cylindrique 30 s'élève jusqu'à un niveau légèrement supérieur au niveau de la ceinture 26 fixée à l'extrémité inférieure de la paroi souple 24. De plus, le diamètre extérieur de cette paroi cylindrique rigide 30 est très légèrement inférieur au diamètre intérieur de la ceinture souple et non extensible 26, de telle sorte que cette ceinture peut venir se placer autour de la partie supérieure de la paroi cylindrique 30, comme le montre la partie gauche de la figure 1.

Le supportage du toit rigide 22 peut être assuré soit de façon totalement indépendante du fond 28, soit au moyen d'une armature rigide formée par exemple de poutrelles verticales 32 régulièrement réparties autour de l'axe vertical de l'isolateur et reliant le toit 22 à la partie basse 18 de la paroi 12.

Pour compléter les moyens de raccordement 20 étanches et déconnectables, la partie supérieure de la paroi cylindrique 30 présente sur sa face extérieure une gorge annulaire 34. Cette gorge 34 est formée au niveau de la ceinture 26 et sert à loger un joint gonflable 36, comme on le voit sur la moitié droite de la figure 1. Les dimensions du joint 34 sont telles que son gonflage a pour effet de l'amener en contact étanche avec la surface intérieure de la ceinture 26, lorsque celle-ci est disposée autour de la partie supérieure de la paroi cylindrique 30. On a représenté schématiquement en 37 l'installation permettant de gonfler et de dégonfler à volonté le joint 36.

L'isolateur représenté schématiquement sur la figure 1 est également équipé d'un stérilisateur 38 de type connu, qui communique avec le volume clos 14 délimité par la paroi 12 au travers d'une tuyauterie 40.

Lorsqu'on désire utiliser l'isolateur 10 de la figure 1 pour fabriquer ou conditionner un produit en milieu aseptique, on dégonfle le joint 36 afin de désolidariser la ceinture 26 du bord cylindrique 30. La ceinture 26 et la paroi souple 24 formant jupe peuvent alors être soulevées vers le haut comme représenté sur la partie droite de la figure 1, ce qui dégage un accès très large à l'intérieur du volume 14. Une quantité très importante de produits et de matériels divers peut ainsi être introduite en peu de temps et sous un conditionnement quelconque à l'intérieur du volume 14.

Lorsque ces opérations préalables sont terminées, la paroi souple 24 est à nouveau tendue de façon à amener la ceinture 26 autour de la partie supérieure de la paroi cylindrique 30, comme l'illustre la partie gauche de la figure 1. Le joint 36 est alors gonflé afin d'assurer simultanément le raccordement des deux parties 16 et 18 de la paroi de l'isolateur et l'étanchéité du volume clos 14.

Avant d'accomplir les différentes tâches auxquelles est destiné l'isolateur 10, le volume clos 14 délimité par la paroi 12 est stérilisé à l'aide du stérilisateur 38.

Pour simplifier, seules les parties de l'isolateur relatives à l'invention sont représentées sur la figure 1. Dans la pratique, cet isolateur est également équipé de façon connue d'un circuit de ventilation et de filtration du volume clos 14 et de moyens permettant d'effectuer à distance toutes les manutentions nécessaires à l'intérieur de ce volume, lorsque les moyens de raccordement 20 sont connectés. Ces moyens de manutention comprennent par exemple des gants invaginés dans la paroi souple 24, un ou plusieurs télémanipulateurs, et/ou un demi-scaphandre fixé sur le fond 28 de l'isolateur.

Dans la variante de réalisation de la figure 2, l'isolateur 110 est réalisé pour l'essentiel de la même manière que sur la figure 1, à l'exception des moyens de raccordement étanches et déconnectables 120 qui vont maintenant être décrits.

Dans ce cas, les moyens de raccordement 120 comprennent une ceinture déformable 126, élastique et étanche, fixée de façon étanche au bord inférieur de la paroi souple 124 de la partie haute 116 de l'isolateur. Cette ceinture élastique 126 peut être allongée pour être placée sur la partie supérieure de la paroi cylindrique rigide 130 de la partie basse 118 de la paroi. Grâce à une telle configuration, la solidarisation des parties haute 116 et basse 118 de la paroi 112 de l'isolateur, ainsi que l'étanchéité du raccordement sont obtenues en une seule opération.

De préférence, afin que l'allongement de la ceinture élastique 126 soit réparti de façon aussi uniforme que possible sur toute la périphérie de l'isolateur et afin d'éviter une déconnexion accidentelle possible des deux parties 116 et 118, des oeillets 142 sont régulièrement répartis sur toute la longueur de la ceinture 126. Comme le montre bien la figure 2, ces oeillets 142 sont prévus pour venir se placer sur des têtes de rivets 144 fixés avec le même pas sur la partie supérieure de la paroi cylindrique rigide 130. Des languettes 126a peuvent alors être prévues sur la ceinture 126 pour en faciliter le démontage.

Bien entendu, l'invention n'est pas limitée aux modes de réalisation qui viennent d'être décrits à titre d'exemple, mais en couvre toutes les variantes.

Ainsi, dans les deux modes de réalisation décrits, la partie basse 18 et 118 de la paroi pourrait être réalisée de façon légèrement différente.

La partie basse de l'isolateur a été décrite comme étant rigide, en une seule pièce et comportant un bord recourbé vers le haut. En variante, ce bord peut aussi être recourbé vers le bas. De plus, lorsque l'isolateur a des dimensions importantes, cette partie basse peut être réalisée en plusieurs parties rigides. L'étanchéité est alors préservée en gainant l'ensemble de la partie basse par un fond souple en une seule pièce sur lequel est raccordée de façon étanche la partie haute de la paroi.

Enfin, l'isolateur selon l'invention peut également être utilisé pour manipuler des produits toxiques ou dangereux. L'atmosphère à l'intérieur de l'isolateur est alors maintenue en dépression pour protéger le personnel situé à l'extérieur.

**Revendications**

1. Isolateur étanche comportant une paroi (12) comprenant une partie basse rigide (18) par laquelle l'isolateur est apte à reposer sur le sol et dont un bord supérieur est délimité par une ceinture rigide (30), et une partie haute (16) comportant une armature rigide (32) supportant une paroi latérale souple (24) dont un bord inférieur est apte à être raccordé de façon déconnectable sur la ceinture rigide (30), caractérisé par le fait qu'il comprend des moyens de stérilisation (38) du volume clos (14) délimité par la paroi souple (12) et par le fait que la ceinture rigide (30) a une forme convexe, la paroi latérale souple (24) étant réalisée en une seule pièce, dépourvue d'ouverture et délimitée sur son bord inférieur par une ceinture déformable (26) apte à encercler de façon étanche ladite ceinture rigide (30), et apte à être déconnectée de la ceinture rigide (30) pour dégager un accès à l'intérieur de l'isolateur.

2. Isolateur selon la revendication 1, caractérisé par le fait que la ceinture déformable (26) est non extensible, la ceinture rigide (30) portant au moins un joint gonflable (36) apte à venir en appui étanche contre la ceinture déformable (26) sur toute la périphérie de cette dernière.

3. Isolateur selon la revendication 1, caractérisé par le fait que la ceinture déformable (126) est élastique, de façon à pouvoir encercler de façon étanche, par allongement, ladite ceinture rigide (130).

4. Isolateur selon la revendication 3, caractérisé par le fait que la ceinture déformable (126) porte des oeillets (142) régulièrement répartis, aptes à être emboîtés sur des têtes de rivets (144) solidaires de la ceinture rigide (130).

5. Isolateur selon l'une quelconque des revendications précédentes, caractérisé par le fait que la partie basse (18, 118) de la paroi est totalement rigide.

**Claims**

1. Sealed isolator comprising a wall (12) having a rigid lower part (18), by which the isolator can rest on the floor an upper edge of which lower part is defined by a rigid belt (30), and an upper part (16) including a rigid fitting (32) supporting a flexible side wall (24), a lower edge of which upper part is formed to be connected in a disconnectable manner over the rigid belt (30), characterized in that it comprises sterilization means (38) for the closed volume (14) defined by the flexible wall (12) and in that the rigid belt (30) has a convex shape, and the flexible side wall (24) comprises a single piece without an opening which is defined on its lower edge by a deformable belt (26) capable of encircling the rigid belt (30) and sealing the parts and which can be disconnected from the rigid belt (30) to give access to the interior of the isolator.

2. Isolator as defined by claim 1, characterized in that the deformable belt (26) is unstretchable, and the rigid belt (30) has an inflatable seal (36) formed to sealingly contact the deformable belt (26) over an entire periphery of the deformable belt.

3. Isolator as defined by claim 1, characterized in that deformable belt (126) is elastic and is capable of stretching and encircling the rigid belt (130) to form a seal.

4. Isolator as defined by claim 3, characterized in that the deformable belt (126) has regularly distributed eyelets (142) formed to fit over heads of corresponding rivets (144) which are integral with the rigid belt (130).

5. Isolator as defined in any one of the preceding claims, characterized in that the lower part (18, 118) of the wall is completely rigid.

**Patentansprüche**

1. Dichter Isolator mit einer Wand (12) mit einem unteren, steifen Teil (18), durch den der Isolator geeignet ist auf dem Boden zu ruhen und dessen oberer Rand von einer steifen Begrenzung (30) umgeben ist, und mit einem oberen Teil (16) mit einer steifen Bewehrung (32), die eine biegsame Seitenwand (24) trägt, von der ein unterer Rand geeignet ist, abnehmbar auf der steifen Begrenzung (30) befestigt zu werden, gekennzeichnet durch die Tatsache, daß er Sterilisationsvorrichtungen (38) für das geschlossene (14) umfaßt, das von der biegsamen Seitenwand (12) gebildet wird, und durch die Tatsache, daß die steife Begrenzung (30) eine konvexe Form besitzt, wobei die biegsame Seitenwand (24) aus einem einzigen Stück ohne Öffnung geformt ist und an ihrem unteren Rand von einer verformbaren Begrenzung (26) begrenzt wird, die geeignet ist, die steife Begrenzung (30) dicht zu umgeben, und geeignet ist von der steifen Begrenzung (30) entfernt zu werden, um einen Zutritt zum Inneren des Isolators freizugeben.

2. Isolator nach Anspruch 1, gekennzeichnet durch die Tatsache, daß die verformbare Begrenzung (26) nicht ausdehnbar ist, wobei die steife Begrenzung (30) wenigstens eine aufblasbare Verbindung (36) trägt, die geeignet ist, sich dicht gegen die verformbare Begrenzung (26) auf der gesamten Peripherie der letzteren zu stützen.

3. Isolator nach Anspruch 1, gekennzeichnet durch die Tatsache, daß die verformbare Begrenzung (126) derart elastisch ist, daß sie durch Verlängerung die steife Begrenzung (130) dicht umgeben kann.

4. Isolator nach Anspruch 3, gekennzeichnet durch die Tatsache, daß die verformbare Begrenzung (126) gleichmäßig verteilte Ösen (142) trägt, die geeignet sind, auf mit der steifen Begrenzung (130) verbundene Nietköpfe (144) aufgesetzt zu werden.

5. Isolator nach einem der vorhergehenden Ansprüche, gekennzeichnet durch die Tatsache, daß der untere Teil (18, 118) der Wand vollständig steif ist.

EP 0 340 366 B1

# FIG. 1

# FIG. 2

6